Europäisches Patentamt

European Patent Office

Office européen des brevets

(19)

(11) Veröffentlichungsnummer: **0 247 327 B1**

# (12) EUROPÄISCHE PATENTSCHRIFT

(45) Veröffentlichungstag der Patentschrift: **21.11.91**

(21) Anmeldenummer: **87104778.3**

(22) Anmeldetag: **31.03.87**

(51) Int. Cl.5: **H01M 4/74**, H01M 4/76, H01M 10/12

(54) **Negative Elektrode für Bleiakkumulatoren.**

(30) Priorität: 02.04.86 DE 3610951

(43) Veröffentlichungstag der Anmeldung:
02.12.87 Patentblatt 87/49

(45) Bekanntmachung des Hinweises auf die
Patenterteilung:
21.11.91 Patentblatt 91/47

(84) Benannte Vertragsstaaten:
AT BE CH ES FR GB IT LI NL SE

(56) Entgegenhaltungen:
EP-A- 0 143 666          WO-A-82/04354
DE-A- 3 238 485          DE-A- 3 312 550
DE-A- 3 401 441          GB-A- 2 119 159

(73) Patentinhaber: **HAGEN Batterie AG**
**Thomästrasse 27/28**
**W-4770 Soest(DE)**

(72) Erfinder: **Nann, Eberhard, Dr.**
**Schmückersweg 2**
**W-4770 Soest-Deiringsen(DE)**
Erfinder: **Rusch, Wieland, Dr.**
**Terlindenweg 10**
**W-4770 Soest(DE)**

(74) Vertreter: **Manitz, Gerhart, Dipl.-Phys. Dr.**
**MANITZ, FINSTERWALD & ROTERMUND**
**Robert-Koch-Strasse 1**
**W-8000 München 22(DE)**

## Beschreibung

Die Erfindung betrifft eine negative Elektrode für Bleiakkumulatoren in Form einer aus mit einer Bleischicht überzogenem Kupferstreckmetall bestehenden rechteckigen ebenen Gitterplatte, die als Träger für die aktive Masse und zur Stromzu- bzw. abführung dient, wobei die Streckrichtung des Streckmetalls parallel zu derjenigen Seite der rechteckigen Platte verläuft, an der die Anschlußfahne angeordnet ist, und wobei an der betreffenden Seite eine sich über deren gesamte Länge erstreckende metallische Stromleitleiste vorgesehen ist, die an die Anschlußfahne angeschlossen ist.

Bei einer bekannten negativen Elektrode dieser Art (DE-C 22 41 368), ist die Stromleitleiste durch eine an der oberen Kante der Gitterplatte befestigte Bleileiste gebildet, mit der die Anschlußfahne aus einem Stück besteht. Weiter ist es schon bekannt (DE-A 33 12 550), die Bleileiste an die Gitterplatte anzugießen, um eine besonders gute stromleitende Verbindung zwischen dem Kupferstreckmetall und der Bleileiste zu erzielen.

Wenn auch bei der bekannten negativen Elektrode durch die Verwendung des Kupferstreckmetalls die Stromleitung erheblich verbessert ist, so besteht doch ein Problem noch darin, den in den einzelnen Flächenbereichen der Gitterplatte erzeugten Strom möglichst verlustfrei zur Anschlußfahne zu führen. Das Anbringen der Bleileiste an der oberen Kante der Gitterplatte bedingt einen hohen Herstellungsaufwand und erhöht außerdem das an sich durch die Verwendung von Kupfer relativ niedrige Gewicht der Gitterplatte.

Das Ziel der Erfindung somit darin, eine negative Elektrode der eingangs genannten Gattung zu schaffen, welche bei vereinfachter Herstellung und verringertem Gewicht eine möglichst verlustfreie Stromleitung zur Anschlußfahne gewährleistet.

Zur Lösung dieser Aufgabe sieht die Erfindung vor, daß die Gitterplatte aus zwei seitlichen Kupferstreckmetallbereichen und einem dazwischen einstückig angeordneten flachen Kupferstreifen besteht, der auf einer Seite zur Bildung der Anschlußfahne über die Kupferstreckmetallbereiche vorsteht, und daß die Stromleitleiste durch die entsprechend abgeschnittenen und bis zur gegenseitigen Berührung aufeinander zugebogenen Stege an der auf der Seite der Anschlußfahne befindlichen Kante der Kupferstreckmetallbereiche gebildet ist.

Durch Vorsehen des Kupferstreifens zwischen den Kupferstreckmetallbereichen wird die Stromabführung aus den einzelnen Flächenbereichen des Kupferstreckmetalls wesentlich verbessert, weil der Strom zunächst in Querrichtung zu dem relativ nahegelegenen Kupferstreifen geführt wird, von wo er dann annähernd verlustfrei zur Anschlußfahne gelangen kann, weil der Kupferstreifen bei geeigneter Breitenwahl einen wesentlich geringeren Widerstand hat als das Kupferstreckmetall. Dieser Vorteil wirkt sich besonders günstig bei Traktionsbatterien aus, wo die einzelnen Gitterplatten im Vergleich zu ihrer Breite sehr hoch ausgebildet sind.

Durch die elektrisch leitende Verbindung der an der oberen Kante abgeschnittenen Stege erübrigt sich das Anbringen einer Bleileiste in diesem Bereich vollständig. Dies bedeutet nicht nur eine erhebliche Herstellungsvereinfachung und Gewichtseinsparung; von besonderem Vorteil ist, daß durch die elektrisch leitende Verbindung der abgeschnittenen Stege ein besonders verlustarmer Stromweg in Querrichtung in Richtung auf den Kupferstreifen bzw. die Anschlußfahne geschaffen wird, weil die abgebogenen und miteinander in Verbindung gebrachten Stege aus Kupfer bestehen. Es wird so in dem besonders kritischen Bereich der oberen Kante der Gitterplatte eine verbesserte Stromführung gewährleistet, und zwar überraschenderweise unter Gewichtsreduzierung und trotz vereinfachter Herstellung. Die durch die abgeschnittenen und aufeinander zu gebogenen Stege gebildete Stromleitleiste hat gleichzeitig noch den Vorteil, Abschluß des Massefeldes zu sein.

Obwohl es aus Gründen einer möglichst widerstandsarmen Stromleitung zum Kupferstreifen hin bevorzugt ist, wenn sich der Kupferstreifen etwa in der Mitte zwischen den beiden Kupferstreckmetallbereichen befindet, ist es gleichwohl möglich, daß der Kupferstreifen exzentrisch zur Mitte der Gitterplatten, jedoch relativ nahe zur Mitte angeordnet ist. Hierdurch lassen sich die Abschlußfahnen deutlich getrennt von denen der zwischen den negativen Platten angeordneten positiven Platten an die negativen Platten elektrisch in Verbindung bringende Verbinder anschließen.

Besonders zweckmäßig ist es, wenn die Stege an der oberen Kante zwischen zwei Knotenpunkten so zugeschnitten sind, daß ihre Länge im wesentlichen gleich der Hälfte der Länge der parallel zur oberen Kante verlaufenden Diagonalen der Streckmetallmaschen ist. Aufgrund dieser Ausbildung müssen die zugeschnittenen Stege praktisch bis in die Richtung der oberen Kante nach unten abgebogen werden, so daß praktisch am oberen Rand dieser Gitterplatte eine im wesentlichen senkrecht zu dem Kupferstreifen verlaufende Stromleitleiste befindet. Der Erfindungsgedanke besteht also darin, daß die am oberen Ende der Gitterplatte vorzusehende Stromleitleiste durch die abgebogenen Stege des Kupferstreckmetalls selbst gebildet wird. Grundsätzlich könnte dieser Gedanke auch bei allen Kupferstreckmetallgitterplatten angewendet werden, bei denen entweder gar kein Kupferstreifen oder ein Kupferstreifen an einer Seite vorgesehen ist. Bevorzugt und mit besonderem Vorteil werden jedoch die zu einer Stromleitleiste abgebogenen Stege des Kupferstreckmetalls in Verbindung mit dem in etwa mittig angeordneten Kupferstreifen verwendet, der einstückig in die Anschlußfahne übergeht.

Eine weitere vorteilhafte Ausführungsform kennzeichnet sich dadurch, daß die Berührungsverbindung der sich berührenden abgebogenen Stege aufgrund nachfolgender Verzinnung und/oder Verbleiung zusätzlich durch eine Lötverbindung ergänzt ist. Derartige Kupferstreckmetallgitter werden üblicherweise zunächst verzinnt und dann mit einer Bleischicht überzogen. Diese Maßnahme wird erfindungsgemäß nach dem Abbiegen und In-Berührung-Bringen der Stege an der der Anschlußfahne zugewandten Kante der Gitterplatte angewendet, so daß die mechanische Verbindung noch durch eine Lötverbindung ergänzt wird.

Um auch im Bereich des Kupferstreifens noch negative Masse haltbar unterbringen zu können, ist ein weiters Ausführungsbeispiel so ausgebildet, daß der Kupferstreifen über seine Länge verteilt Löcher aufweist, wobei jedoch der Bereich unmittelbar unter der Anschlußfahne bzw. der oberen Kante von Löcher freigehalten ist. Das Freilassen des Kupferstreifens von Bohrungen in dem Bereich des Überganges des Streckmetallkante zur Anschlußfahne ist von besonderer Bedeutung, da gerade in diesem kritischen Bereich die Stromleitung nicht durch Einbringung zusätzlicher Widerstände behindert werden darf. Um möglichst viel aktive Masse in die Löcher einbringen und dort sicher haltern zu können, soll jedes Loch rundum von einem Kragen umgeben sein,der durch das aus dem Bereich der Löcher durch Stanzungen herausgedrückte Kupfermaterial gebildet ist. Hierbei ist es zweckmäßig, wenn die Kragen sich abwechselnd auf der einen oder der anderen Seite des Kupferstreifens befinden.

Wenn die Gitterplatten wie üblich mit vertikal verlaufendem Kupferstreifen und oben befindlicher Anschlußfahne in einem Gehäuse angeordnet sind, wird der aus den unteren Bereichen der Platte nach oben zur Anschlußfahne fließende Strom insgesamt immer einen höheren Widerstand vorfinden als der in höheren Bereichen der Gitterplatte entstehende Strom. Um auch insoweit eine verbesserte Stromleitung herbeizuführen, kennzeichnet sich eine weitere Ausführungsform dadurch, daß der Kupferstreifen zur Bildung zweier Anschlußfahnen an beiden Enden der Gitterplatte über die Kupferstreckmetallbereiche hinaus vorsteht. Die Anschlußfahnen an beiden Enden der Gitterplatten sind über geeignete Verbinder zu einem gemeinsamen Anschlußpol geführt.

Da es problematisch ist, am unteren Ende der Gitterplatten vorgesehene Anschlußfahnen über Verbinder nach oben zu führen, kennzeichnet sich eine weitere Ausführungsform der Erfindung dadurch, daß die Gitterplatten in einem Gehäuse abwechselnd mit Separatormaterial und positiven Platten, die ebenfalls an beiden Enden Anschlußfahnen aufweisen, horizontal angeordnet sind, wobei ein gelartiger oder vliesgebundener Elektrolyt verwendet wird. Hier können die an gegenüberliegenden Seiten vorgesehenen Anschlußfahnen über geeignete Verbinder symmetrisch in den oberen Bereich des Gehäuses geführt werden.

Um den Elektrolyten in einem Vlies zu halten, werden vorzugsweise die positiven Elektrodenplatten in Taschen aus einem Glasvlies eingelegt, wie das in der DE-A-36 10 952 im einzelnen beschrieben ist. Auf diese Weise befindet sich innerhalb des Akkumulatorgehäuses praktisch der gesamte Elektrolyt in gebundener Form innerhalb der Glasvlieses. Die Verwendung von Kupferstreckmetall als negative Elektrodenplatte bietet in diesem Fall den besonderen Vorteil, daß über das Kupfer auch eine gute Wärmeableitung zu den Polen gegeben ist. Gerade im Fall der Verwendung von gelartigem oder vliesgebundenem Elektrolyten entfällt nämlich die Möglichkeit der Wärmeableitung durch Elektrolytkonvektion.

Eine weitere Möglichkeit besteht darin, daß die Gitterplatten in einem Gehäuse abwechselnd mit Separatomaterial und positiven Platten, die ebenfalls an beiden Enden Anschlußfahnen aufweisen, vertikal mit horizontal verlaufendem Kupferstreifen angeordnet sind. In diesem Fall kann wegen der vertikalen Anordnung der Gitterplatten auch ein flüssiger Elektrolyt Verwendung finden.

Am Fuß der Gitterplatte kann gemäß einer weiteren Ausführungsform eine Kunststoffabschlußleiste durch Spritzguß oder Extrudieren angebracht sein.

Bevorzugt ist es jedoch, wenn auch am unteren Rand der Gitterplatte eine analog wie oben ausgebildete Stromleitleiste angeordnet ist. Hierdurch wird die Stromleitfähigkeit in Querrichtung auch am unteren Rand der Gitterplatte erhöht.

Bei einem Bleiakkumulator mit negativen Elektroden gemäß vorliegender Erfindung ist es zweckmäßig, wenn die vorzugsweise in Glasvliesseparatorblätter eingetaschten positiven Platten aus Fallgußgitter hergestellt oder als Panzerplatten ausgebildet sind.

Hierbei soll insbesondere vorgesehen sein, daß die Seelen der mit der positiven Masse gefüllten Röhrchen deutlich über die Fußleiste vorstehen und dort mit der die Anschlußfahne aufweisenden Stromleitleiste verlötet oder verschweißt sind bzw. die Fußleiste direkt die Stromleitleiste bildet.

Die Erfindung wird im folgenden beispielsweise anhand der Zeichnung beschrieben; in dieser zeigt:

Figur 1     eine schematische Draufsicht einer erfindungsgemäßen negativen Elektrode,

Figur 2     einen vergrößerten Ausschnitt aus Figur 1 im Bereich des Überganges der Kupferstreckmetallbereiche in die Anschlußfahne bzw. den Kupferstreifen,

Figur 3     eine schematische vergrößerte Schnittdarstellung eines Ausschnittes des Kupferstreifens der erfindungsgemäßen negativen Elektrode während der Anbringung der Masse-Halterungs- und -Aufnahmebohrungen,

Figur 4     eine Draufsicht eines mit horizontal angeordneten negativen Elektroden gemäß der Erfindung ausstatteten Akkumulatorengehäuses,

Figur 5     einen Vertikalschnitt entlang der Gitterplattenebenen einer weiteren Ausführungsform mit vertikal angeordneten negativen Elektroden gemäß der Erfindung, welche Anschlußfahnen an zwei gegenüberliegenden Seiten aufweisen,

Figur 6     eine positive Panzerplatte, wie sie insbesondere für den Bleiakkumulator nach Fig. 4 geeignet ist,

Figur 7     den um $180°$ verdrehten Ausschnitt VII von Fig. 6 in vergrößertem Maßstab während des Verschweißens der Seele mit der Stromleitleiste und

Figur 8     eine Teildarstellung des unteren Teils eines Röhrchens einer Panzerplatte mit einer Fußleiste aus einem temperaturbeständigen Sinterkörper.

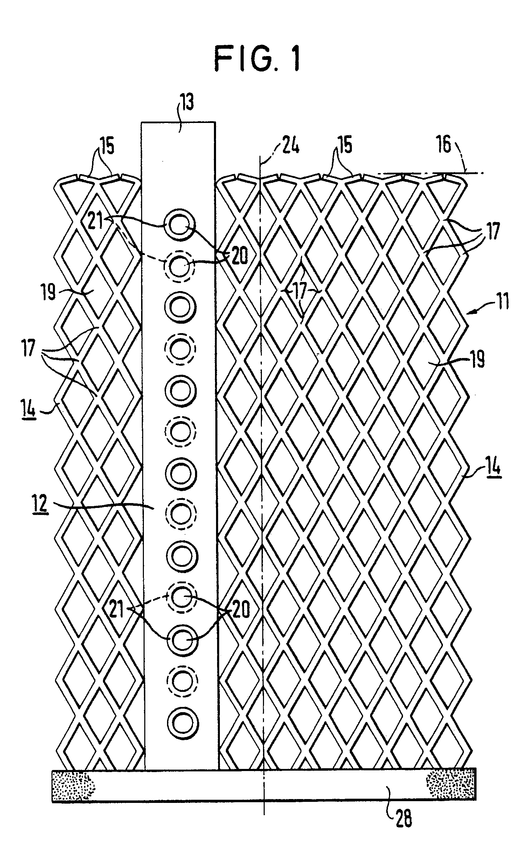

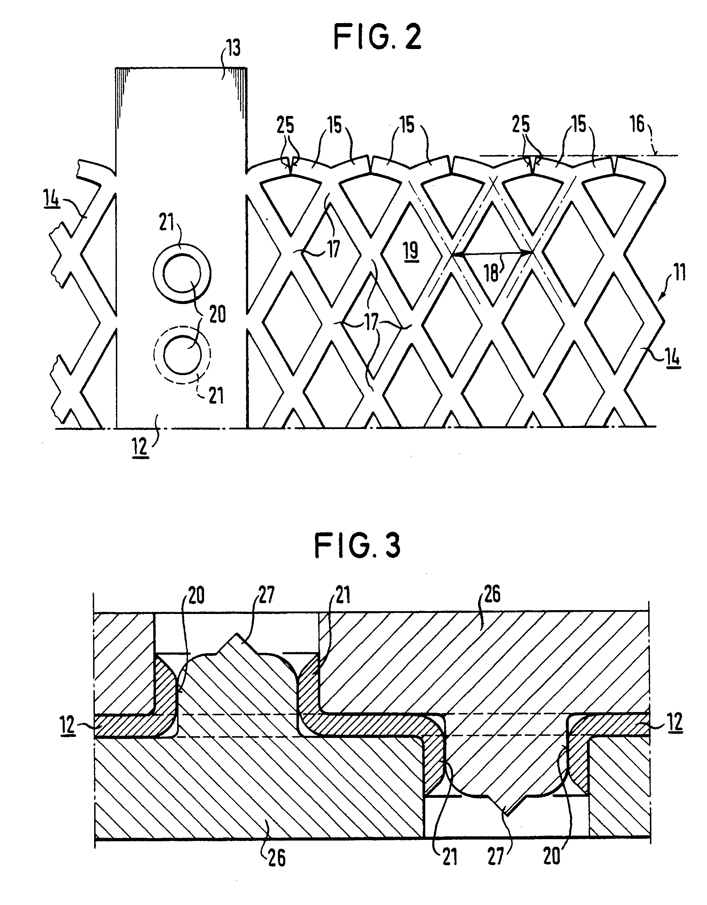

Nach den Figuren 1 und 2 weist eine erfindungsgemäße Gitterplatte 11 etwas gegenüber ihrer vertikalen Mittelachse 24 nach einer Seite versetzt einen vertikal verlaufenden flachen Kupferstreifen 12 auf, von dem aus sich nach beiden Seiten einstückig Kupferstreckmetallbereiche 14 erstrecken und welcher oben einstückig in eine über die obere Kante 16 der Kupferstreckmetallbereiche 14 vorstehende Anschlußfahne 13 übergeht.

Wie sich besonders deutlich aus Figur 2 ergibt, sind die Kupferstreckmetallbereiche 14 im Bereich der oberen Kante 16 horizontal so von dem darüber befindlichen Kupferstreckmaterial abgeschnitten, daß die verbleibenden, nur unten mit Knotenpunkten 17 in Verbindung stehenden Stege 15 eine Länge aufweisen, die im wesentlichen der halben Länge einer horizontalen Diagonalen 18 der Streckmetallmaschen 19 entspricht. Die Stege 15 sind paarweise aufeinander zu in eine Richtung abgebogen, die senkrecht auf der Längserstreckung des Kupferstreifens 12 steht. Auf diese Weise werden die abgeschnittenen Enden 25 jeweils zweier nach dem Abschneiden nahe beieinanderliegenden Stege 15 in mechanische und stromleitende Verbindung gebracht. Durch geeignete Schnittführung und Zusammenpressung kann und soll ein möglichst großflächiger Berührungsbereich zwischen den abgebogenen Stegen 15 bestehen. Bei der anschließenden Verzinnung und Verbleibung werden die eventuell noch in den Berührungsbereichen verbleibenden Spalte durch Zinn und Blei ausgefüllt, so daß die mechanische Verbindung noch durch eine Lötverbindung ergänzt wird.

Deutlich unterhalb der oberen Kante 16 der Gitterplatte 11 sind in dem Kupferstreifen 12 Bohrungen 20 vorgesehen, die gleichmäßigen Abstand haben und nur eine solche Größe aufweisen, daß die Stromleitung des Kupferstreifens 12 nicht merklich beeinträchtigt wird. Nach Figur 1 sind dreizehn Bohrungen im gleichen Abstand über annähernd die gesamte Höhe des Kupferstreifens 12 gleich verteilt angeordnet.

In Figur 3 ist das Stanz-Zieh-Werkzeug 26 veranschaulicht, mittels dessen die Bohrungen 20 in dem Kupferstreifen 12 angebracht werden. Das Werkzeug weist mit Spitzen 27 versehene Stempel auf, welche beim Niedergehen auf den Kupferstreifen 12 bewirken, daß das Kupferblechmaterial in der Mitte der vorzusehenden Bohrungen 20 zunächst durchtrennt und dann so um $90°$ nach außen gebogen wird, daß kreiszylinderförmige Kragen 21 entstehen, die abwechselnd nach entgegengesetzten Seiten des Kupferstreifens 12 vorstehen. Die Bohrungen 20 und insbesondere die Kragen 21 dienen dazu, die aktive Masse der negativen Elektrode aufzunehmen und intensiv festzuhalten.

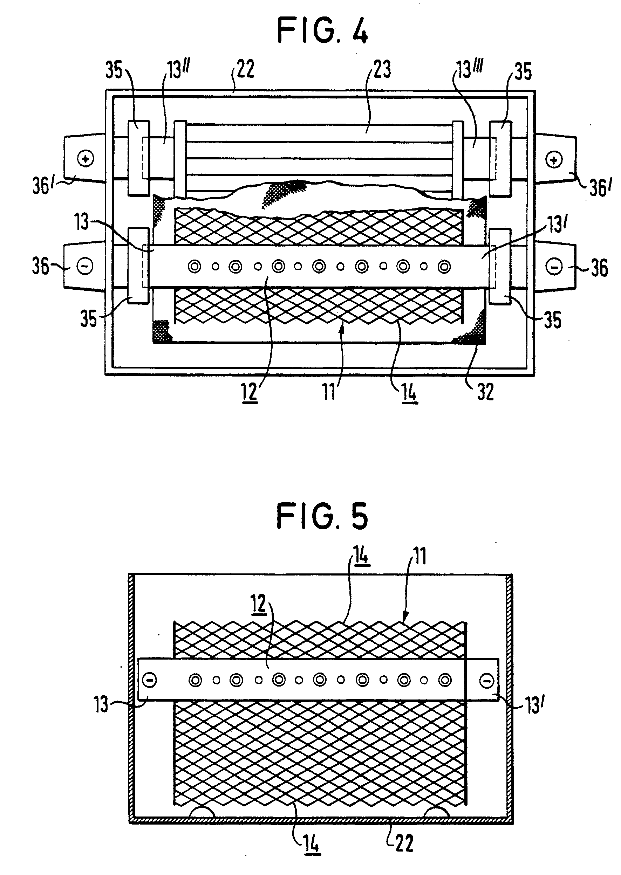

Bei dem Ausführungsbeispiel nach Figur 4 sind die negativen Elektroden 11 abwechselnd mit positiven Platten 23 unter Zwischenschaltung von Separatormaterial horizontal in einem Gehäuse 22 angeordnet, welches einen gelartigen bzw. vliesgebundenen Elektrolyten enthält. Die negativen Platten 11 und die positiven Platten 12 weisen an entgegengesetzten Stirnseiten jeweils Anschlußfahnen 13, 13' bzw. 13", 13''' auf. Die Anschlußfahnen 13, 13' der negativen Elektrode 11 sind dadurch gebildet, daß der Kupferstreifen 12 sich an beiden Stirnseiten über die Kupferstreckmetallbereiche 14 hinaus erstreckt. Die Anschlußfahnen 13, 13' bzw. 13", 13''' sind in nicht dargestellter Weise mit zu Anschlußpolen des Gehäuses führenden Verbindern elektrisch leitend verbunden.

Die Anschlußfahnen 13, 13', 13" bzw. 13''' sind miteinander durch im Gehäuse 22 verlaufende Brücken 35 elektrisch leitend miteinander verbunden, welche an den beiden Seiten des Gehäuses übereinander angeordnet sind und horizontal verlaufen. An die Brücken 35 sind die seitlich herausgeführten Pole 36, 36' angelegt. Natürlich können auch die Anschlußfahnen ausserhalb des Gehäuses miteinander verbunden werden. Die positiven Platten 23 sind als Panzerplatte oder Gitterplatte z.B. aus Blei-Streckmetall hergestellt.

Bevorzugt sind die positiven Elektroden 23 in Taschen aus einem mikroporösen Glasvliesseparator 32 eingelegt, wodurch der Elektrolyt gebunden wird. Möglich ist auch die Verwendung eines gelartigen Elektrolyts.

Die Verwendung einer negativen Elektrode aus Kupferstreckmetall hat im Zusammenhang mit der Festlegung des Elektrolyten in einem Glasvliesseparator 32 oder durch eine derartige Eigenschaft den besonderen Vorteil, daß die Wärme aus dem Innern des Akkumulators zu den Polen 36, 36' hin wesentlich besser abgeleitet wird. Bei dieser Ausführung kann nämlich keine Elektrolytkonvektion stattfinden, die sonst einen Wärmeaustausch möglich machen würde.

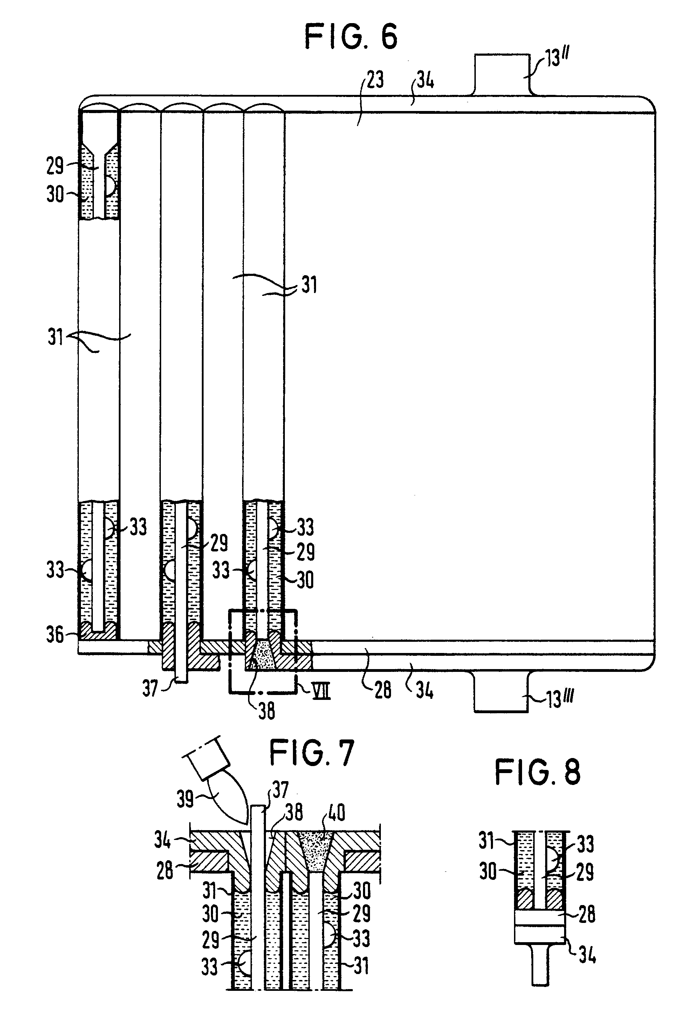

Fig. 6 zeigt eine besonders bevorzugte Ausführungsform einer positiven Panzerplatte 23, deren Merkmale unabhängig von denen der negativen Elektrode vorteilhaft sind.

Nach Fig. 6 sind an beiden Seiten der Elektrode 23 Stromleitleisten 34 vorgesehen. Zwischen diesen erstreckt sich die aus Röhrchen 31 bestehende eigentliche Plattenanordnung. Die Röhrchen 31 sind mit der positiven Masse 30 gefüllt und von aus Blei bestehenden Seelen 29 axial durchzogen, welche in bestimmten Abständen mit Abstandshaltern 33 versehen sind. Oben in Fig. 6 erweitern sich die Seelen und sind dort mit der Stromleitleiste 34 verbunden oder in einem Stück gegossen. Am in Fig. 6 unteren Ende der Platte 23 befindet sich eine Fußleiste 28, die jedoch aufgrund der erfindungsgemäßen Ausbildung aus wärmebeständigem Material, vorzugsweise gemäß Fig. 8 aus einem temperaturbeständigen Sinterkörper bestehen sollte.

Während die heutzutage verwendeten Fußleisten so ausgebildet sind, wie das in der Zeichnung bei 36 angedeutet ist, stehen bei der Herstellung erfindungsgemäß die Seelen 29 - wie bei 37 angedeutet - durch entsprechende Bohrungen in der Fußleiste 28 und Bohrungen 38 (Fig. 7) der Stromleitleiste 34 vor und werden im Bereich des oben vorstehenden Endes von einer Flamme 39 erhitzt, worauf das Material schmilzt und die sich nach außen erweiternde Bohrung 38 als später erhärtende Schmelze 40 ausfüllt.

Nach Fig. 6 und 7 weist die Stromleitleiste 34 im Bereich der dem Durchmesser der Röhrchen 31 entsprechenden Bohrungen in der Fußleiste 28 zu den Röhrchen 31 hingerichtete Vorsprünge auf, die im Paßsitz in den unteren Bereich der Röhrchen 31 eindringen. Die Bohrungen 38 verlaufen durchgehend von der unteren Fläche der Stromleitleiste 34 bis zum oberen Ende der betreffenden Vorsprünge innerhalb der Röhrchen 31. Gegebenenfalls können die Vorsprünge der Stromleitleisten 34 gemäß Fig. 7 im Bereich des unteren Endes der Röhrchen 31 eine stufenförmige Durchmesserverkleinerung aufweisen, derart, daß der Durchmesser unterhalb der Röhrchen 31 geringfügig größer als darüber ist. Das Ende 37 der Seele 29 erstreckt sich durch die Vorsprünge und die Stromleitleiste 34 im Bereich der Bohrung 38 hindurch.

Die Stromleitleisten 34 tragen die Anschlußfahnen 13", 13''', die auch in Fig. 4 angedeutet sind.

Es ist auch möglich, die Anordnung mit den bei 37 vorstehenden Seelen in ein erhitztes Bad einzutauchen, wobei die Stromleitleiste 34 mit der Anschlußfahne 13''' vorgeformt ist. Anstelle der heute verwendeten Kunststoffleiste kann eine entsprechend vorgeformte Bleileiste mit zentrisch geöffneten Durchführungen eingesetzt werden. In diesem Fall muß lediglich die Seele mit der Bleileiste verlötet werden.

Sofern eine Fußleiste aus temperaturbeständigem Material, z.B. einem Sinterkörper, verwendet wird, kann der überstehende Teil 37 der Seele einfach mit der Hilfsform verschweißt werden.

Bei der Ausführungsform nach Figur 5 weisen die negativen Elektrodenplatten 11 ebenfalls an beiden Stirnflächen mit dem Kupferstreifen 12 einstückige Anschlußfahnen 13, 13' auf. Ähnlich wie bei der Ausführungsform nach Figur 4 ist auch hier der Kupferstreifen 12 horizontal innerhalb eines Gehäuses 22 angeordnet. Im Gegensatz zu der Ausführungsform nach Figur 4 stehen jedoch die Elektroden 11 vertikal. Die Anschlußfahnen 13, 13' sind wieder ebenso wie die nicht dargestellten Anschlußfahnen der abwechselnd zwischen den negativen Elektroden 11 vorgesehenen positiven Platten über nicht dargestellte Verbinder zu Anschlußpolen des Gehäuses geführt, die ebenfalls nicht gezeigt sind.

Aufgrund der Anordnung von Anschlußfahnen 13, 13' an beiden Enden des Kupferstreifens 12 wird die Stromausleitung aus den negativen Elektroden 11 weiter begünstigt. Am unteren Ende der Gitterplatte 11 ist eine Kunststoffabschlußleiste 28 z.B. durch Anspritzen angebracht.

## Patentansprüche

1. Negative Elektrode für Bleiakkumulatoren in Form einer aus mit einer Bleischicht überzogenem Kupferstreckmetall bestehenden rechteckigen ebenen Gitterplatte, die als Träger für die aktive Masse und zur Stromzu- bzw. Abführung dient, wobei die Streckrichtung des Streckmetalls parallel zu derjenigen Seite der rechteckigen Platte verläuft, an der die Anschlußfahne angeordnet ist, und wobei an der betreffenden Seite eine sich über deren gesamte Länge erstreckende metallische Stromleitleiste vorgesehen ist, die an die Anschlußfahne angeschlossen ist, dadurch **gekennzeichnet,** daß die Gitterplatte (11) aus zwei seitlichen Kupferstreckmetallbereichen (14) und einem dazwischen einstückig angeordneten flachen Kupferstreifen (12) besteht, der auf einer Seite zur Bildung der Anschlußfahne (13) über die Kupferstreckmetallbereiche (14) vorsteht, und daß die Stromleitleiste durch die entsprechend abgeschnittenen und bis zur gegenseitigen Berührung aufeinander zu gebogenen Stege (15) an der auf der Seite der Anschlußfahne (13) befindlichen Kante (16) der Kupferstreckmetallbereiche (14) gebildet ist.

2. Elektrode nach Anspruch 1, dadurch **gekennzeichnet,** daß der Kupferstreifen (12) exzentrisch zur Mitte der Gitterplatte (14), jedoch relativ nahe zur Mitte angeordnet ist.

3. Elektrode nach Anspruch 1 oder 2, dadurch **gekennzeichnet,** daß die Stege (15) an der oberen Kante (16) zwischen zwei Knotenpunkten (17) so zugeschnitten sind, daß ihre Länge im wesentlichen gleich der Hälfte der Länge der parallel zur oberen Kante (16) verlaufenden Diagonalen (18) der Streckmetallmaschen (19) ist.

4. Elektrode nach einem der vorhergehenden Ansprüche, dadurch **gekennzeichnet,** daß die Berührungsverbindung der sich berührenden abgebogenen Stege (15) aufgrund nachfolgender Verzinnung und/oder Verbleiung zusätzlich durch eine Lötverbindung ergänzt ist.

5. Elektrode nach einem der vorhergehenden Ansprüche, dadurch **gekennzeichnet,** daß der Kupferstreifen (12) über seine Länge verteilt insbesondere gestanzte Löcher (20) aufweist, wobei jedoch der Bereich unmittelbar unter der Anschlußfahne (16) bzw. der oberen Kante (16) von Löchern freigehalten wird, wobei insbesondere jedes Loch (20) rundum von einem Kragen (21) umgeben ist, der durch das aus dem Bereich der Löcher (20) durch Stanzen herausgedrückte Kupfermaterial gebildet ist, und bevorzugt auch noch die Kragen (21) sich abwechselnd auf der einen oder der anderen Seite des Kupferstreifens (12) befinden.

6. Elektrode nach einem der vorhergehenden Ansprüche, dadurch **gekennzeichnet,** daß der Kupferstreifen (12) zur Bildung zweier Anschlußfahnen (13, 13') an beiden Enden der Gitterplatte (11) über die Kupferstreckmetallbereiche (14) hinaus vorsteht.

7. Elektrode nach einem der vorhergehenden Ansprüche, dadurch **gekennzeichnet,** daß am Fuß der Gitterplatte (11) eine Kunststoffabschlußleiste (28) durch Spritzguß oder Extrudieren angebracht ist.

8. Elektrode nach einem der vorhergehenden Ansprüche, dadurch **gekennzeichnet,** daß auch am unteren Rand der Gitterplatte (11) eine analog wie oben ausgebildete Stromleitleiste angeordnet ist, wobei zweckmäßig die Gitterplatten (11) in einem Gehäuse (22) abwechselnd mit Separatormaterial und positiven Platten (23), die ebenfalls an beiden Enden Anschlußfahnen (13″, 13‴) aufweisen, horizontal angeordnet sind, wobei ein gelartiger oder vliesgebundener Elektrolyt verwendet wird.

9. Bleiakkumulator, insbesondere mit einer Elektrode nach Anspruch 8, dadurch **gekennzeichnet,** daß die Gitterplatten (11) in einem Gehäuse (22) abwechselnd mit Separatormaterial und positiven Platten (23), die ebenfalls an beiden Enden Anschlußfahnen (13″, 13‴) aufweisen, vertikal mit horizontal verlaufendem Kupferstreifen (12) angeordnet sind.

10. Bleiakkumulator mit negativen Elektroden nach einem der vorhergehenden Ansprüche, dadurch **gekennzeichnet,** daß die vorzugsweise in Glasvliesseparatorblätter eingetaschten positiven Platten (23) aus Fallgußgitter hergestellt oder als Panzerplatten ausgebildet sind, wobei bevorzugt die Seelen (29) der mit der positiven Masse (30) gefüllten Röhrchen (31) deutlich über sie Fußleiste (28) vorstehen und dort mit der Anschlußfahne (13", 13''') aufweisenden Stromleitleiste (34) verlötet oder verschweißt sind oder die mit der positiven Masse gefüllten Röhrchen (31) eine Fußleiste (28) enthalten, die gleichzeitig auch als Stromleitleiste (34) dient.

**Claims**

1. A negative electrode for lead accumulators in the form of a rectangular, planar grid plate of expanded copper metal which is coated with a layer of lead and serves as a carrier for the active mass and for the current supply and current extraction, wherein the stretching direction of the expanded metal extends parallel to that side of the rectangular plate at which the connection terminal is arranged, and wherein a metallic current conducting strip is provided at the relevant side, extends over the full length thereof and is connected to the connection terminal, characterised in that the grid plate (11) consists of two side regions of expanded copper metal (14) and a flat copper strip (12) unitarily arranged therebetween which projects beyond the regions of expanded copper metal (14) at one side to form the connection terminal (13); and in that the current conducting strip is formed by the webs (15) at the edge (16) of the regions of expanded copper metal (14) located at the connection terminal side of the grid plate, said webs being appropriately cut off and bent towards one another into mutual contact.

2. An electrode in accordance with claim 1, characterised in that the copper strip (12) is disposed eccentric to the center of the grid plate (14) but however relatively close to the center.

3. An electrode in accordance with claim 1 or claim 2, characterised in that the webs (15) are so cut to length at the upper edge (16) between two node points (17) that their length is substantially the same as half the length of the diagonals (18) of the expanded metal mesh (19) extending parallel to the upper edge (16).

4. An electrode in accordance with one of the preceding claims, characterised in that the contact connection of the contacting bent over webs (15) is supplemented by a solder connection as a result of subsequent tinning and/or leading.

5. An electrode in accordance with one of the preceding claims, characterised in that the copper strip (12) has holes (20), in particular punched holes (20) distributed over its length, however with the region directly below the connection terminal (13) or the upper edge (16) being kept free of holes, wherein each hole (20) is in particular surrounded by a collar (21) which is formed by the copper material pressed out by punching from the region of the holes (20), and further the collars (21) are preferably alternately located on the one or other side of the copper strip (12).

6. An electrode in accordance with one of the preceding claims, characterised in that the copper strip (12) projects beyond the regions of expanded copper metal (14) at both ends of the grid plate (11) to form two connection terminals (13, 13').

7. An electrode in accordance with one of the preceding claims, characterised in that a plastic termination strip (28) is mounted at the foot of the grid plate (11) by injection molding or extrusion.

8. An electrode in accordance with one of the preceding claims, characterised in that a current conducting strip is also arranged at the lower edge of the grid plate (11) and is constructed analogously to the current conducting strip at the top, wherein the grid plates (11) are expediently horizontally disposed in a housing (22) alternately with separator material and positive plates (23) which likewise have connection terminals (13", 13"') at both ends, with a gel-like or fleece bound electrolyte being used.

9. Lead accumulator, in particular with an electrode in accordance with claim 8, characterised in that the grid plates (11) are vertically arranged with horizontally extending copper strips (12) in a housing (22) alternatingly with separator material and positive plates (23) which likewise have connection terminals (13", 13"') at both ends.

10. Lead accumulator with negative electrodes in accordance with one of the preceding claims, characterised in that the positive plates (23), which are preferably pocketed in glass fiber mat separator leaves, are constructed as gravity cast grids or as tubular plates, wherein the cores (29) of the tubules (31) filled with the positive mass (30) project preferably substantially beyond the foot strip (28) and are soldered or welded there to the current conducting strip (34) having the connection terminal (33); or in that the tubules (31) filled with the positive mass contain a foot strip (28) which simultaneously also serves as a current conducting strip (34).

**Revendications**

1. Electrode négative pour accumulateurs au plomb, sous la forme d'une plaque de grille plane et rectangulaire en cuivre déployé recouverte d'une couche de plomb, qui sert de support pour la masse active et pour l'écoulement de courant entrant et sortant, la direction de déploiement du métal déployé s'étendant parallèlement à celui des côtés de la plaque rectangulaire sur lequel est agencée la borne de raccordement, et une bordure métallique conductrice de courant étant prévue sur le côté en question et sur toute la longueur, ladite bordure métallique étant connectée à la borne de raccordement, caractérisée en ce que la plaque de grille (11) comprend deux zones latérales de cuivre déployé (14) et une bande de cuivre plane (12) agencée d'une seule pièce entre lesdites zones et dépassant d'un côté au-delà des zones de cuivre déployé (14) afin de former la borne de raccordement (13), et en ce que la bordure conductrice de courant est formée par les talons (15) sur les bords (16) côté borne de raccordement (13) des zones de cuivre déployé (14), ces bords étant découpés de façon correspondante et recourbés l'un vers l'autre de manière à venir en contact mutuel.

2. Electrode selon la revendication 1, caractérisée en ce que la bande de cuivre (12) est agencée de manière décentrée par rapport au centre de la plaque de grille (14), mais toutefois relativement proche du centre.

3. Electrode selon l'une des revendications 1 ou 2, caractérisée en ce que les talons (15) sur le bord supérieur (16) sont coupés à longueur entre deux points nodaux (17) de telle manière que leur longueur est pratiquement égale à la moitié de la longueur des diagonales (18) des mailles de métal déployé (19) dirigées parallèlement au bord supérieur (16).

4. Electrode selon l'une des revendications précédentes, caractérisée en ce que la liaison à contact entre les talons (15) recourbés en contact mutuel est complétée au moyen d'une liaison soudée grâce à un étamage et/ou un plombage ultérieur.

5. Electrode selon l'une des revendications précédentes, caractérisée en ce que la bande de cuivre (12) comporte des trous (20), en particulier des trous poinçonnés, distribués sur toute sa longueur, la zone située immédiatement au-dessous de la borne de raccordement (16) ou du bord supérieur (16) étant toutefois maintenue exempte de trous, chaque trou (20) étant en particulier entièrement entouré d'un col (21) formé par le cuivre refoulé hors de la région des trous (20) lors du poinçonnage, et les cols (21) étant de préférence situés en alternance d'un côté ou de l'autre de la bande de cuivre (12).

6. Electrode selon l'une des revendications précédentes, caractérisée en ce que la bande de cuivre (12) dépasse aux deux extrémités de la plaque de grille (11) au-delà des zones de cuivre déployé (14) afin de former deux bornes de raccordement (13, 13').

7. Electrode selon l'une des revendications précédentes, caractérisée en ce qu'une bordure de terminaison en matière plastique (28) est rapportée au pied de la plaque de grille (11), par moulage sous pression ou par extrusion.

8. Electrode selon l'une des revendications précédentes, caractérisée en ce qu'une bordure conductrice de courant, réalisée de la même manière que la bordure supérieure, est également agencée au bord inférieur de la plaque de grille (11), les plaques de grille (11) étant convenablement agencées horizontalement dans un boîtier (22) en alternance avec un matériau de séparation et des plaques positives (23), lesquelles comportent également des bornes de raccordement aux deux extrémités (13", 13'''), et il est fait usage d'un électrolyte du type gel ou retenu par une nappe.

9. Accumulateur au plomb, comportant en particulier une électrode selon la revendication 8, caractérisé en ce que les plaques de grille (11) sont agencées verticalement dans un boîtier (22), avec les bandes de cuivre (12) orientées horizontalement, en alternance avec un matériau de séparation et des plaques positives (23) qui comportent également des bornes de raccordement (13", 13''') aux deux extrémités.

10. Accumulateur au plomb comportant des électrodes négatives selon l'une des revendications précédentes, caractérisé en ce que les plaques positives (23), de préférence reçues dans des poches en feuilles séparatrices de mat de verre, sont réalisées à partir de grilles coulées par gravité ou sous forme de plaques tubulaires, les âmes (29) des tubules (31) remplies de la masse positive (30) dépassant de préférence nettement au-delà de la bordure de pied (28) et étant soudées ou brasées à cet endroit à la bordure conductrice (34) comportant les bornes de raccordement (13", 13'''), ou en ce que les tubules (31) remplies de la masse positive comprennent une bordure de pied (28) qui fait simultanément office de bordure conductrice de courant (34).

# FIG. 1

# FIG. 2

# FIG. 3

# FIG. 4

# FIG. 5

# FIG. 6

# FIG. 7

# FIG. 8